(19)

**Europäisches Patentamt**
**European Patent Office**
**Office européen des brevets**

(11) **EP 4 752 751 A1**

(12) **EUROPEAN PATENT APPLICATION**

(43) Date of publication:
**03.06.2026 Bulletin 2026/23**

(21) Application number: **25217388.5**

(22) Date of filing: **20.11.2025**

(51) International Patent Classification (IPC):
*G06F 16/3329* (2025.01)    *H04L 51/02* (2022.01)

(52) Cooperative Patent Classification (CPC):
**G06F 16/3329; H04L 51/02;** H04L 51/212;
H04L 51/226

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **02.12.2024 US 202463726759 P**
**18.12.2024 US 202418986185**

(71) Applicant: **Microsoft Technology Licensing, LLC**
**Redmond, WA 98052 (US)**

(72) Inventors:
• **ZHU, Yiwen**
  **Redmond, Washington 98052 (US)**
• **DENG, Kai**
  **Redmond, Washington 98052 (US)**
• **VERMAREDDY, Divya**
  **Redmond, Washington 98052 (US)**
• **LI, Xia**
  **Redmond, Washington 98052 (US)**
• **VENKATRAMAN KRISHNAN, Subramaniam**
  **Redmond, Washington 98052 (US)**
• **SAHOO, Nutan**
  **Redmond, Washington 98052 (US)**
• **NAGULAPALLI, Harsha Nihanth**
  **Redmond, Washington 98052 (US)**
• **LIN, Ya**
  **Redmond, Washington 98052 (US)**
• **DEMARNE, Mathieu Baptiste**
  **Redmond, Washington 98052 (US)**
• **WANG, Wenjing**
  **Redmond, Washington 98052 (US)**

• **CILIMDZIC, Miso**
  **Redmond, Washington 98052 (US)**
• **BALIGA, Neena Uma**
  **Redmond, Washington 98052 (US)**
• **GREENE, Lindsay Gray**
  **Redmond, Washington 98052 (US)**
• **CAROPRESO, Rodrigo De Toledo**
  **Redmond, Washington 98052 (US)**
• **LERNER, Hannah Margrete**
  **Redmond, Washington 98052 (US)**
• **BHAVAN, Anjali**
  **Redmond, Washington 98052 (US)**
• **BARARIA, Swati**
  **Redmond, Washington 98052 (US)**
• **LU, Yunlei**
  **Redmond, Washington 98052 (US)**
• **DUBEAU, Jordan Daniel**
  **Redmond, Washington 98052 (US)**
• **SMITH, Christian Blake Adam**
  **Redmond, Washington 98052 (US)**
• **SINGH, Harshdeep**
  **Redmond, Washington 98052 (US)**
• **JENA, Mona Lisa**
  **Redmond, Washington 98052 (US)**
• **REID, Seth Alexander**
  **Redmond, Washington 98052 (US)**
• **AZARIAH, John Samuel**
  **Redmond, Washington 98052 (US)**
• **ZHANG, William**
  **Redmond, Washington 98052 (US)**

(74) Representative: **CMS Cameron McKenna Nabarro**
**Olswang LLP**
**Cannon Place**
**78 Cannon Street**
**London EC4N 6AF (GB)**

(54) **FRAMEWORK FOR SELF-HOSTING AND DEVELOPING AI-DRIVEN SUPPORT SYSTEMS**

(57) A system receives a user a configuration file including chatbot framework information for configuring a framework for a chatbot for a team of end users, uses the configuration file to determining a plurality of data sources relevant to the team; downloads document chunks from the data sources, processes the document chunks to generate metadata tags, and vectorizes the metadata tags to generate metadata embeddings for the plurality of document chunks. In response to receiving a user query, the system uses the metadata embeddings to select a collection of the document chunks and passes the collection of document chunks to a language model (LM) with the user query.

**EP 4 752 751 A1**

FIG. 1

## Description

## Background

Engineers, support personnel, customer service representatives, and other team members at large companies frequently face the challenge of searching through scattered documentation to perform their work. Especially, engineers working on large and cutting-edge technology products face the challenge of searching through telemetry data, troubleshooting guides, incident reports, etc., from a number of different sources and accessing a multitude of internal toolkits. Furthermore, for incident resolution, the process can be daunting due to the unfamiliarity of such legacy sources under strict time constraints.

## Summary

In some aspects, the technology described herein relates to providing self-hosting and developing AI-Driven support systems. According to one implementation, a disclosed method includes receiving from a user a configuration file including chatbot framework information for configuring a framework for a chatbot for a team of end users, the user configuration file including at least one of a name of a team, one or more document sites related to the team, one or more incident identifications searched by the team, determining a plurality of data sources relevant to the team based on the chatbot framework information, downloading a plurality of document chunks from the data sources relevant to the team, processing the plurality of document chunks to generate metadata tags related to the document chunks, vectorizing the metadata tags to generate metadata embeddings for the plurality of document chunks, and in response to receiving a user query, using the metadata embeddings to select a collection of the document chunks that are passed to a language model (LM) with the user query.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

Other implementations are also described and recited herein.

## Brief Descriptions of the Drawings

FIG. 1 illustrates an example implementation of an artificial intelligence (AI) based chatbot development system.
FIG. 2 illustrates example implementation of a document preprocessor.
FIG. 3 illustrates an alternative example schematic of an offline document preprocessor.
FIG. 4 illustrates example schematic diagram illustrating how ranking indicators influence the document retrieval pipeline.
FIG. 5 illustrates an example implementation of a skill selection engine that is configured to organize skills into various hierarchical skill groups
FIG. 6 illustrates example operations for hierarchically selecting skills based on user queries.
FIG. 7 illustrates example operations illustrating retrieval of a document chunk in response to a user question.
FIG. 8 illustrates an example of a computing device for use in implementing the described technology.

## Detailed Descriptions

As recent systems became more complex, these systems and their maintenance have accumulated a tremendous variety of documents, such as past incident reports, production documentation, and troubleshooting guides maintained by different teams. By some estimates, on a daily basis, software engineers spend more than forty percent of their time dedicated to development activity that includes searching these knowledge bases. Sifting through these extensive documents is a cumbersome process. Beyond potentially needing to synthesize documents across different platforms and owning teams, identifying relevant documents requires extensive in-depth knowledge and domain expertise. This is exacerbated for newer engineers, who may lack familiarity with past incidents or relevant documentation that is commonly acquired through experience.

With the rapid recent advancement of language models (LMs), a new generation of AI bots are being explored to assist these engineers by providing quick access to relevant information and bridging the gap left by tacit knowledge. As used herein, the term **"language model"** or LM refers to a model that is trained to interpret textual inputs and generate textual outputs. Textual inputs and outputs consist of written words, characters, symbols, and spaces that represent language, ideas, or concepts. Per the above definition, the term "language model" encompasses natural language processing (NLP) models as well as models that process other types of textual inputs, including text-based code and textual characters. Additionally, "language model" encompasses certain multimodal models that can receive prompts that include text, image, audio, and/or video data and that may generate outputs of multiple types that are not necessarily the same as the input type. Example types of language models include transformer-based models such as generative pre-trained transformer (GPT) models, Open Pretrained Transformer (OPT) models, and Bidirectional Encoder Representations from Transformers (BERT) models, as well as Bioscience Large Open-science Open-access Multilingual (BLOOM) models, seq2seq models, long short-term memory (LSTM) network, and recurrent neural networks (RNNs). Examples of publicly available multimodal language models include the Mistral AI model and the large language model Meta AI (LLaMa) model.

By employing a retrieval augmented generation (RAG) approach, the technology disclosed herein first embeds each document into a document embedding space. Using the user's question, it then selects top-k most relevant documents from the knowledge base (e.g., based on distance between embedding vectors, full text search), augments the original user prompt with these documents, and prompts an LM to obtain a final answer. The effectiveness of such technology depends on the document retrieval pipeline's efficacy and the pipeline's ability to learn from user feedback. Particularly, various implementations disclosed herein provide a technique that enables the bot to learn from the copious user-driven feedback it accumulates over time without manual intervention.

Specifically, various implementation of an AI based chatbot development system disclosed herein provide a framework that injects additional markers, signals, metadata, etc., all collectively referred to herein as "metadata tags," into documents embedding space to assist in retrieval of the documents. In one implementation, such metadata tags may be generated directly from historical feedback from users, such as "Doc-A is useful to answering Q1," or synthetically by prompting an LM to generate questions from documents. In various implementations, this feedback is decentralized, by scattering it across the documents themselves, and can be done during pre-processing, with minimal impact to latency during online retrieval.

Subsequently, at retrieval time, the framework allows to first retrieve a super set of relevant documents in response to a question from an end user and then uses the metadata tags to approximate relevance of the various retrieved documents. Subsequently, the framework re-ranks the retrieved documents based on various criteria, including user feedback, skill set, etc., before selecting top K most relevant documents that can be presented to the end user in response to the question.

Furthermore, the AI based chatbot development system disclosed herein provide a framework that allows a team to develop a chatbot that can be used by the team members. For example, for a technology team that is working in a cloud fabric, the AI based chatbot development system presents a configuration file to the team to collect various information that can be used in implementing the chatbot. For example, using such configuration file, the cloud fabric team may provide information about a name of a team, one or more document sites related to the team, one or more incident identifications searched by the team, etc. Subsequently, the framework does the backend setting up of the various databases, indexing the documents within these databases, generating URL with a UI that can be used by the end users of the cloud fabric team for running the chatbot, etc.

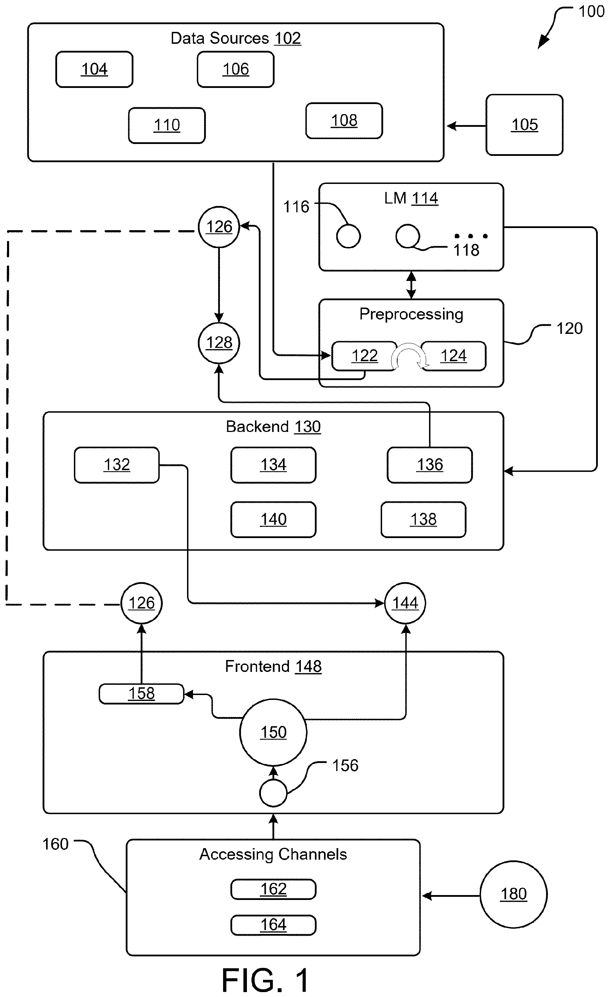

FIG. 1 discloses an implementation of the system disclosed herein for providing self-hosting and developing AI-Driven support systems. The system 100 is referred to hereinafter as the AI based chatbot development system 100. The AI based chatbot development system 100 may include a number of data sources 102 that can be used by different teams. For example, the data sources 102 may include a code development data source 102, a knowledge data source 104, a relation model database 106, a query model database 108, a telemetry database 110, etc. The AI based chatbot development system 100 allows one or more team that wants to develop an AI based chatbot system to select one or more of the data sources 102. For example, a cloud fabric team may specify, using a config file 105, that it wants to use the code development data source 102 and the knowledge data source 104.

The AI based chatbot development system 100 also includes a preprocessing engine 120 including a preprocessing pipeline 122 and a scheduler 124. The preprocessing engine 120 preprocesses the data sources selected by the team. Such preprocessing, as disclosed in further detail below, may include downloading relevant data from the selected data sources, generating necessary embeddings, indexing the documents from the downloaded data sources, etc. For example, the embedding of the documents may include generating embedding vectors based on the document content.

The preprocessed data source is stored in a cloud-based blob storage 126. Furthermore, the preprocessing engine 120 also creates an AI search index 128. The AI search index 128 may, for example, specify the parts of preprocessed data sources as they are stored on the cloud-based blob storage 126. The preprocessing engine 120 also allows the team creating the AI based chatbot system to add additional metadata tags to various document chunks of the selected data sources. Subsequently, these metadata tags are also embedded in the preprocessed document chunks of the selected data sources. For example, a user may add additional metadata tag for different usage of various document chunks of the selected data sources and these metadata tags is included in the preprocessed data source stored in the cloud-based blob storage 126. Alternatively, the preprocessing engine 120 may use an LM 114 to generate metadata tags for various document chunks.

The AI based chatbot development system 100 also includes the backend 130 that may be implemented as a stateless API. As the backend endpoint is stateless, it requires all necessary information, such as full chat history with the end user 180, to be provided as input to the backend API. However, this abstracts away most of the engineering overhead that handles authentication and state, which are handled by the frontend 148.

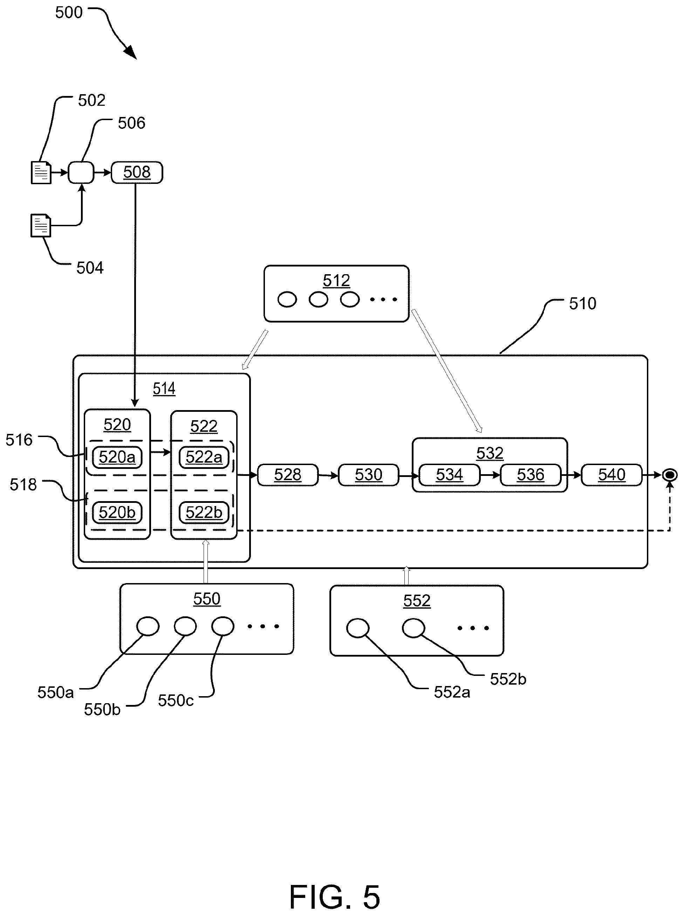

The backend 130 may include an orchestrator 132 that communicates with the frontend 148 via a stateless API 144. A skills node 134 may generate execution plans based on available skills. Specifically, the skills node 134 is configured to support the execution of various skills. Examples are the pre-chat and post-chat skills, where the pre-chat skills primarily support content ingestion roles, while the post-chat skills trigger certain actions post-LM and leverages a chat module's output. The skills node134 is further discussed below in FIG. 5.

A retrieval node 136 is configured to communicate with the AI search index 128 to retrieve document chunks from the preprocessed data sources that are stored on the cloud-based blob storage 126. A chat module 138 of the backend 130 may compose prompt templates for the end user 180 using various inputs such as a user-specified prompt, documents retrieved by the retrieval node 136, current ICM database based on an incident ID, chat history received from the frontend, raw question from the end user 180, additional data that may be injected by the skills node 134, rephrased user question, etc.

Finally, the backend 130 also includes one or more auxiliary nodes 140 including a memory extractor that truncates input chat history, a prompt constructor that puts together user input, such as product description, and merges it with the prompt template generated by the chat module 138, and sends the full set of messages to the chat module 138, a skills validator that executes a validation function defined in the class of the invoked skills, a query generator that validates one or more queries using LM to ensure that the queries are grounded based on retrieved documents, etc.

The AI based chatbot development system 100 may also include a frontend 148 that is configured to take care of user authorization, authentication, and session management. Specifically, the frontend 148 is configured to provide a chatbot 156 that is communicatively connected to various user access channels 160 through which an end user 180 interacts with the system. Specifically, the end user 180 may be a member of the team that uses the AI based chatbot development system 100 to set up a chatbot system. The chatbot 156 may communicate with a web-based application 150 using an API. The web-based application 150 may generate session statistics 158 that are communicated to the cloud-based blob storage 126. The web-based application 150 is also configured to communicate with the backend 130 using a stateless API, such as a REST API 144.

The end user 180 may interact with the frontend 148 using the one or more accessing channels 160, such as a browser 162, a collaboration application 164, etc.

Thus, in the implementation of the AI based chatbot development system 100, the backend 130 is stateless in that it does not have any memory about historic conversations. Therefore, the backend REST API 144 may require the input of the user question as well as the full chat history from the frontend 148. The frontend 148 manages the session between the end user 180 and the backend 130, including constructing the chat history including user questions, responses, follow-up questions, etc., and sending it to the backend 130.

The AI search index 128 may also receive input from the backend 130. Specifically, an example input from the backend 130 may be based on a query from the end user 180. For example, the end user 180 may input a question to the 148, "tell me about out of memory issues."

Subsequently, the LM 114 may embed the question string into a vector. For example, such vector may be [1,.01, .55, ...] wherein the various numbers of the vector represent the embedding of the user question. Such vectors are stored in a vector table 116. The vector generated by the embedding of the question depends on the semantic structure of the question. Thus, if two questions are semantically similar, the resulting vector for these two questions are similar in that the vector space distance between them is lower than the vector space distance between vectors for two semantically different sentences.

The LM 114 may also include various generative pretrained transformers (GPT) engine 118 that can use the vector table 116 to automate various tasks. Furthermore, each of the various document chunks from the data sources 102 that are relevant to the team that is deploying the chatbot may be converted into a vector. For example, if the relevant data sources have been chunked into 30,000 documents, each of the 30, 000 documents correspond to a related vector generated by the LM 114.

Subsequently, the vector embedding the user question is compared to the embeddings of the various document chunks of the data source. The LM 114 determines which of the vectors embedding the document chunks is the closest in the vector space to the vector embedding the user question. For example, if document chunk representing page 5 of a web page discusses "out of memory" the vector embedding page 5 may be closest to the vector representing the question "tell me about out of memory issues." Therefore, the LM 114 may present page 5 to the user.

In the specific implementation of the AI based chatbot development system 100 disclosed herein, the preprocessing engine 120 uses LM 114 to pre-process the data sources. As an example, if the relevant data source is an ICM including a large number of ICM entries, these ICM entries are aggregated based on particular incident IDs in the incidents and various incident tables are joined together. Subsequently, the LM 114 extracts incident summary from the joined tables. Such incident summary may include various metadata tags such as region, team ID, time, etc., related to the joined ICM entry. While the above feature of extracting the metadata tags in is discussed in view of data source being an ICM, in alternative implementations, the LM 114 may extract such metadata tags from other document chunks that are part of the document sources 102.

The metadata tags related to the various document chunks are provided to the LM 114 as filtering criteria. Thus, when the LM 114 is retrieving the document chunks for comparison of the document chunk embedding vectors with the user question embedding vector, the LM 114 may filter the document chunks based on the metadata tags. For example, if the user question has team ID as A102, the LM 114 may use the metadata tags of the document chunks to select document chunks that have metadata tag of A102. As another example, if the user question has a timestamp of xx.yy.zz, the LM 114 may filter the document chunks that have time-stamp metadata equal to or close to the time-stamp xx.yy.zz.

Additionally, the preprocessing engine 120 may also use the LM 114 to generate hypothetical questions based on the each of the various document chunks - where the hypo question can be answered by that chunk. For example: The LM 114 may generate five questions that can be answered by each of the document chunks. Subsequently, the LM 114 may generate embeddings vectors of the hypothetical questions that can be compared with the embedding vectors of the user questions. Furthermore, before comparing the embedding vector of the user question with the embedding vectors of the document chunks, the LM 114 may also filter the document chunks based on the embeddings of the hypothetical questions generated from the document chunks. Thus, the LM 114 may determine that the vector embeddings of the hypothetical questions generated from a document chunk related to page are close to the vector embeddings of the user question, the LM 114 may present the document chunk to the user in response to the question.

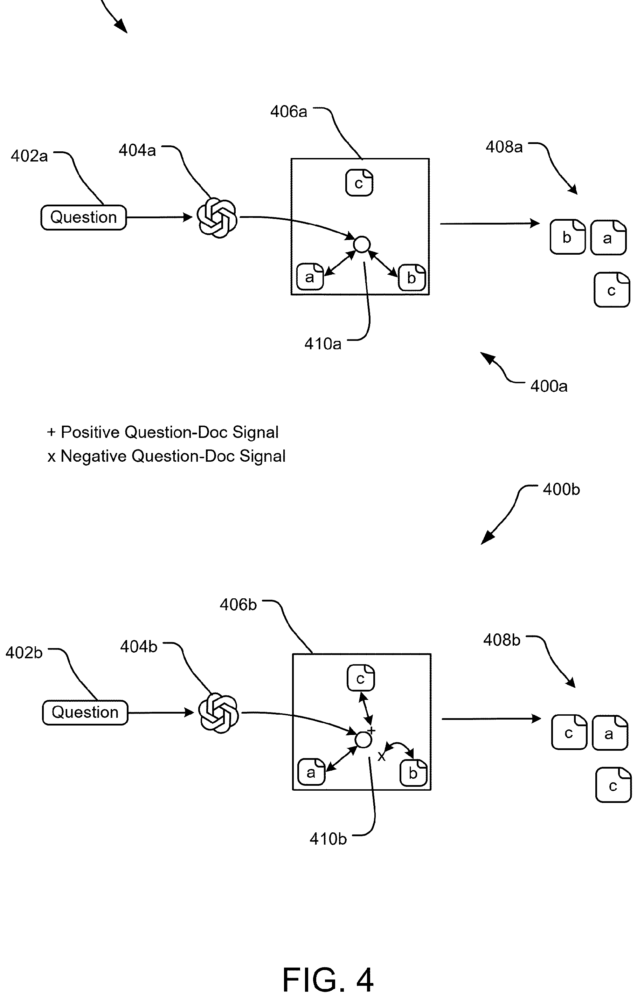

Furthermore, the preprocessing engine 120 may also analyze user feedback in response to the document chunks presented to the user to extract signals that are used as additional metadata tags for the document chunks. Specifically, such metadata tags generated based on the user feedback may be used to rank the document chunks. The ranking of document chunks based on user feedback is disclosed in further detail below in FIG. 4.

Thus, in the implementation of the preprocessing engine 120 allows the LM 114 to incorporate metadata-based filtering of document chunks, use of hypothetical questions based on document chunks, and ranking of document chunks based on feedback learning before processing by the LM 114 of retrieval augmented generation (RAG).

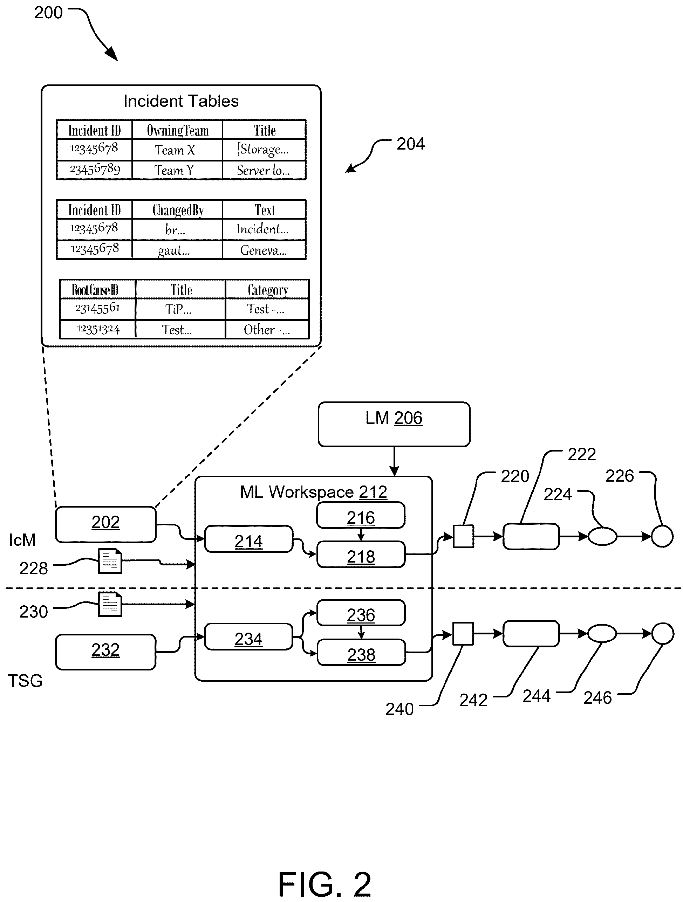

FIG. 2 illustrates example implementation of a document preprocessor 200. The document preprocessor 200 may be implemented as part of the preprocessing engine 120 of the AI based chatbot development system 100 disclosed in FIG. 1. The document preprocessor 200 is illustrated to pre-process incident management (ICM) documents and troubleshooting guidelines (TSG) documents. However, in alternative implementations, the document preprocessor 200 may also preprocess other types of documents for LM.

The document preprocessor 200, when configured to preprocess ICM documents, may receive raw documents, such as raw information about historic incidents that may be scattered across multiple incident tables 204 in the incident management database 202. An ICM configuration file 228 allows a user to specify the ICM database and other relevant information regarding incidents in the incident tables, such as team ID, etc. Specifically, the document preprocessor 200 extracts relevant information from the incident tables 204, condenses the useful information into a structured format, and creates searchable files that can used as additional documentation for an LM 206 deployed with the preprocessing engine 120. The searchable files are stored in an ML workplace 212 to be available to the LM 206.

A query language connector 214 uses secured authentication to access the searchable files and extracts free-form records based on user-specific information provided in the ICM configuration file 228. Subsequently, an ICM processor 218 generates structured summaries from the free-form records based on predefined summarization prompts 216. In one implementation, the ICM processor 218 may use a GPT-4 model made available by the LM 206. The ICM processor 218 may also attach additional retrieval fields to the document for a backend, such as the backend 130 disclosed above in FIG. 1.

The incident summary output by the ICM processor 218 and embedding vectors of the incident summary, as generated by the LM 206, are stored in a cloud blob storage 220. Subsequently, an ICM index manager 222 initiates an indexer pointing to the cloud blob storage 220. A REST API powered by an ICM AI Search 224 is deployed to generate cloud AI ICM service search index 226 for easy search among these files for the backend.

Similarly, the document preprocessor 200, when configured to preprocess TSG documents, may receive raw documents, such as text documentation in Git repositories 232. A TSG configuration file 230 allows a user to specify the TSG data repositories and other relevant information regarding the files in the Git repositories 232. A Git connector 234 extracts free-form records based on user-specific information provided in the TSG configuration file 230. The free form records may be input to an image processor 236 and a TSG processor 238. The TSG processor 238 also receives output from the image processor 236. The TSG processor 238 selects the folders to process, chunks the files, generates embeddings using the LM 206, extract images in base64 format, and stores the output in a cloud blob storage 240. Subsequently, a TSG index manager 242 initiates an indexer pointing to the cloud blob storage 240. A REST API powered by a TSG AI Search 244 is deployed to generate cloud AI TSG service search index 246 for easy search among these files for the backend.

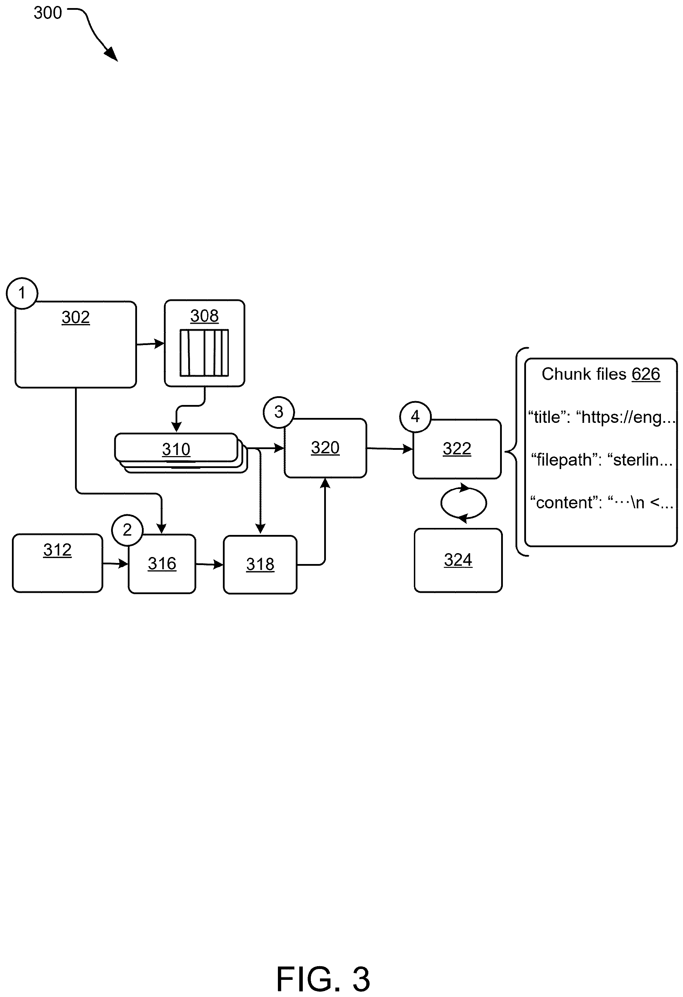

FIG. 3 illustrates an alternative example schematic of an offline document preprocessor 300. Specifically, offline document preprocessor 300 chunks, transforms, and periodically synchronizes documents from a knowledge base 302 with a search index 324. The offline document preprocessor 300 is also configured to incorporate user feedback 312 to fairly re-rank documents across multiple retrieval strategies from a single underlying knowledge base 302. In one implementation, the reranking of the documents across multiple retrieval strategies may be performed online based on additional signals including user feedback 312.

A document chunker 308 periodically fetches all documents from the knowledge base 302 to generate document chunks 310. A mapper 316 is configured to retrieves historical user feedback 312 and build a mapping 318 from document to available feedback. The document chunks 310 are passed through a transformer 320 that generates several indexable fields from each of the document chunks 310. For example, such fields may be document title, chunk content, chunk keywords, etc. Furthermore, the transformer 320 also generates field embeddings from an embedding model.

The transformer is also configured to generate hypothetical questions from each of the document chunks 310, along with fields associated with recent user feedback. For each of the hypothetical question, the question, question embedding, keywords, and metadata, such as usefulness of the document chunk in answering the question, etc., are stored to a blob storage 322. In one implementation, each of the document chunks 310, and its related fields, including hypothetical questions and their related fields, are stored as a JSON file 626 in the blob storage 322. Periodically, these JSON files may be incorporated into a search index 324. As a result of this periodic incorporation, the offline document preprocessor 300 is able to fetch changes to the document store, process them, and incorporate them into the search index for online retrieval.

FIG. 4 illustrates example schematic diagram 400 illustrating how ranking indicators influence the document retrieval pipeline. Specifically, FIG. 4 illustrates how user feedback ban we used to evolve the output generated by the AI based chatbot development system disclosed herein. The AI based chatbot development system may include an indictor depository R which may consist of a plurality of push-pull indicator triplets. Each of these indicator triplets may be in the form of (q, d, s), where q is a historical user question (or intent), d is a document (or chunk) in the knowledge base, and s is a *signal* indicating how useful d is to answering q. The implementation of the AI based chatbot development system disclosed herein assumes that historical interactions can serve as guideposts for future questions. Thus, an indicator triplet (q1, d1, +) may signal that in the near future, is a question q2 arrives and if q2 is similar to q1, the system supplements the list of retrieved documents for q2 with d1. On the other hand, an indicator triplet (q1, d1, -) may signal that in the near future, is a question q2 arrives and if q2 is similar to q1, the system omits document d1 from the list of retrieved documents for q2.

Specifically, 400a presents the scenario when no indicators are present. A question 402a and its embedding 404a may be submitted to a document embedding space 406a. Due to how the embedding model maps documents and user questions into embedding space, relevant documents (e.g., Doc-C) may be located far away and, thus, not retrieved.

On the other hand, 400b represents a scenario with a positive pull indicator (which pulls Doc-C closer) and a negative push indicator (which pushes Doc-B away). These two indicators enable us to retrieve Doc-A and Doc-C instead, which contains the correct document. Specifically, 402b presents the scenario when no indicators are present. A question 402b and its embedding 404b may be submitted to a document embedding space 406b. In this case, the indictor depository R includes feedback indicator triplets (q1, dC, +) and (q2, dB, -). Therefore, due to these feedback indicators in the indictor depository R, Doc-C (relevant to q1 402a) is retrieved and its ranking with respect to the embedding 410a of the user question 402a is decreased or Doc C is pushed closer from the embedding 410a of the user question 402a.

On the other hand, Doc-B (not relevant to q2 402b) is not retrieved and its ranking with respect to the embedding 410b of the user question 402b is decreased or Doc B is pushed away from the embedding 410b of the user question 402b. The use of feedback signals in the manner disclosed herein improves the likelihood of retrieving the most relevant documents in the knowledge base. Specifically, these feedback signals provide the AI based chatbot development system with flexibility to continuously retrieve different document sets that are then combined and holistically re-ranked. Thus, the ranking system disclosed herein allows adding the document skill related to the one or more of the document chunks to the one or more metadata tags related to the document chunks, which also allows prioritizing one or more of the document chunks based on the feedback ranking to generate reranked and reprioritized document chunks 408a, 408b.

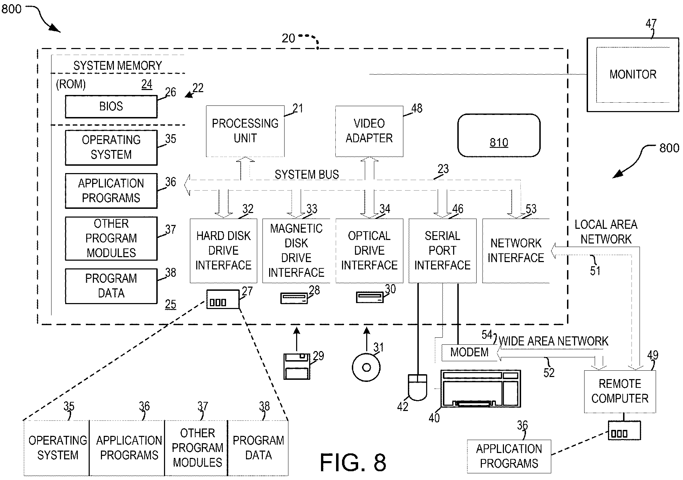

FIG. 8 illustrates an implementation of a skill selection engine 500 that is configured to organize skills into various hierarchical skill groups and then sequentially select a skill from one of the hierarchical skill groups. For example, the skill selection engine may be configured to organize many types of skills, such as document retrieval skills, skills that can perform some tasks, such as querying for deployment status, constructing the correct queries based on user request, or automatically show user the relevant dashboard link, etc.

The skill selection engine 500 is configured to support execution of various skills. However, to reduce the number of calls to an LM and to reduce latency, the skill selection engine 500 may limit the use of LM for most skills. Instead, the skill selection engine 500 combines outputs from various skills and uses them jointly as context within a call to the LM. This approach results in the workflow of the skill selection engine 500 having a skill-chat-skill sequence, thus reducing the latency of conversations by making one call to the LM. To achieve this, the skills are categorized into two-types. The skills that primarily support content retrieval are referred to as the pre-chat skills and the skills that trigger actions post LM call are referred to as the post-chat skills.

Thus, as shown herein, the skill selection engine 500 includes a hierarchical skill organizer 510 that organizes a set of skills 512 into pre-chat skills 512 and post-chat skills 514. A configuration file 502 received from a user may include chatbot framework information for configuring a framework for a chatbot for a team of end users. A user input file 504 may provide other input variables, such as name of a team, one or more document sites related to the team, one or more incident identifications searched by the team , etc.

An initialization module 506 performs necessary set up and initialization functions of a memory extractor object 508 to extract the information from the configuration file 502 and the user input file 504. In one implementation, a memory extractor 508 may truncate the input chat history based on configured parameters of a chat history file, such as the max_chat_history file. The memory extractor 508 may also leverage other memory management techniques to retrieve or delete relevant information from the full chat history.

The hierarchical skill organizer 510 may include a hierarchical planner, wherein each of the hierarchical planners manage a subset of skills. The use of the hierarchical planners reduces the complexity faced by the hierarchical skill organizer 510. For example, the pre-chat skills 514, may include a first group of skills referred to as default skills 516, which may include content retrieval skills that are essential for addressing most inquiries. Examples of such skills include skills related to retrieving code, retrieving ICM, retrieving TSG, etc. These skills may be backed by cloud-based AI search indexes 550. For example, the cloud-based AI search indexes 550 may include an ICM index 550a, a TSG index 550b, a code index 550c, etc.

The pre-chat skills 514 may also include a set of customized skills 518 including skills for specific types of queries using team-specific internal tools. Examples of such customized skills 518 may include skills that directs a user to monitoring dashboards relevant to their specific team. The customized skills 518 may be invoked less frequently and they may be specific to particular teams. In one implementation of the skill selection engine 500, the customized skills 518 may bypass the LM module 552, thus reducing the latency.

The default skills 516 and the customized skills 518 may be implemented using a planner module 520 and executor modules 522. For example, the default skills 516 maybe implemented by a default skills planner 520a and a default skills executor 522a. The customized skills 518 may be implemented by customized skills planner 520b and a customized skills executor 522b.

Subsequently, the prompt constructor 528 may put together user inputs, such as product description, etc. and merge it with prompt templates and send a full set of messages to the chat module 530. The chat module 530 may assemble its prompt template using a number of elements, including user-specified prompts, retrieved documents, current incident (when the database relates to incident management), chat history, rephrased user questions, user's raw questions, etc.

A third group of skills, referred to as the post chat skills 532 is executed after the chat module 530. The post chat skills 532 may depend on outputs from the chat module 530, such as answers from the chat module 530. For example, certain query generation skill with the capabilities to extract queries from the provided answers may be activated only if the output of the chat module 530 includes such queries. Alternatively, the post chat skills 532 may initiate post-chat actions, such as recommending follow-up questions. The post-chat skills 532 may be managed by a post-chat skills planner 534 and a post-chat skills executor 536. This organization structure also significantly reduces the post-chat skills planner's 534 task complexity.

An implementation of the skill selection engine 500 incorporates inter-skill dependencies, allowing multiple skills to use outputs from other skills for contextual grounding. Such inter-skill dependencies may be upstream dependencies that are explicitly declared in the given skills' properties. For example, during the execution, skills that do not have dependencies may be run concurrently to minimize latency. In one implementation, the execution order, rather than being generated by the planner, may be deterministically determined based on the properties of the skills.

A skills validator 540 may provide a validation function defined in a class of the invoked skills. For example, a skill of a query generator may validate the generated queries using one of the LMs 552 to ensure the query is grounded based on retrieved documents.

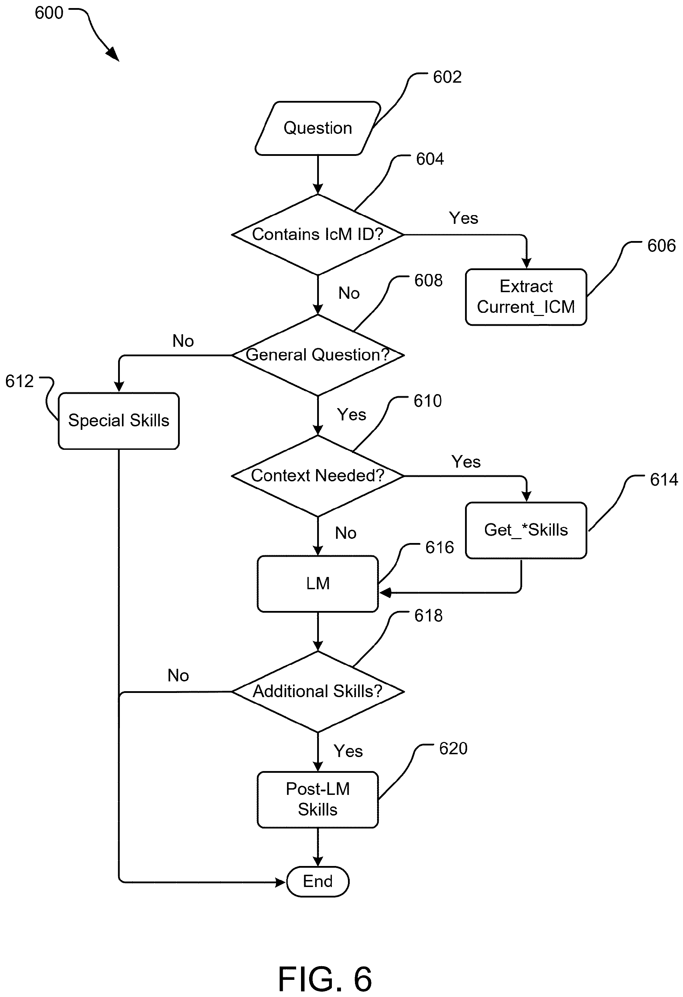

FIG. 6 illustrates operations 600 for hierarchically selecting skills based on user queries. Specifically, the operations 600 illustrate intelligently selecting skills such as plugins, functionalities, etc., based on user queries in a sequential decision making process, ensuring that the most relevant information and tools are used for problem-solving for the different steps of the answer generation flow.

An operation 602 receives a question from an end user. For example, such question may be "tell me about an incident x." An operation 604 determines if there is an incident ID in the question. If so, this is a question related to a current ICM skill, and an operation 606 selects a pre-chat default skill.

If the operation 604 determines if there is no incident ID in the question, subsequently, an operation 608 determines if this is a general question. If it is not a general question, as per operation 612 the question is related to a special skill. However, if the question is a general question, an operation 610 determines if a context is needed. For example,

If contes is needed, an operation 614 gets documents with pre-chat skills based on the context, such as from an ICM database, from a TSG database, etc. Subsequently, at operation 616 the documents are transferred to an LM 616 to generate an answer. For example, the LM may generate the answer using RAG.

Subsequently, an operation 618 determines if there are any additional skills needed. If so, an operation 620 receives documents with post-LM skills. For example, if the output of the LM contains some SQL type of syntax in it, the 618 may determine this to be a post LM skill and may invoke an SQL query generator to extract the SQL query and fix the output generated by the LM using the results of the SQL query.

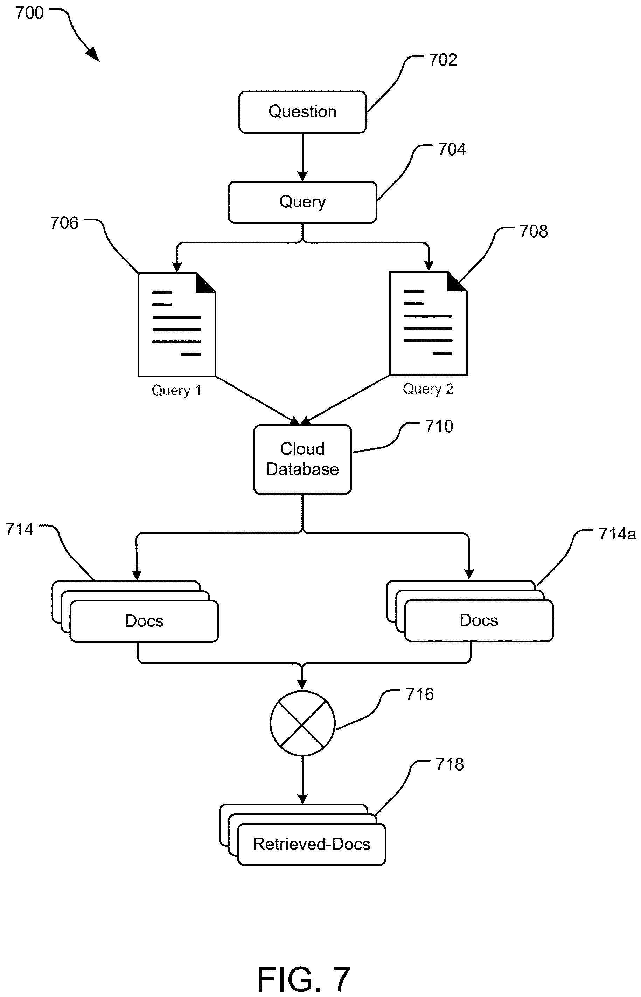

FIG. 7 illustrates operations 700 illustrating retrieval of a document chunk in response to a user question. Specifically, the operations 600 are illustrated in view of database of ICM, with document chunks representing ICM incidents. An operation 702 initiates the operations 700 by receiving a user's query. In response an operation 704 conducts a query task using predefined query templates. For example, the query operation performed by the operation 704 may be a natural language to search query (NL2SearchQuery) that fills input parameters with values extracted from chat context. In one implementation, LM is used to extract several key arguments of the query. Examples of such key arguments include rephrased user question, search fields, method of search, time range of the user question, ticket type of incident, etc.

The operation 704 may generate different search query depending on the question and one or more of the various input parameters. For example, a user question such as "show me incidents related to an out-of-memory error with error code 11323" may necessitates a query 1 706. On the other hand, a user question "show me incidents for the resource group of test-copilot in the last three months" may necessitate a different query 2 708. Each of the queries 706, 708 is translated into an AI Search query, executed on the database of document chunks and the output is stored in a cloud database 710.

The return of the search queries may consist of a larger number of document chunks 714, 714a. For example, each of the document chunks 714, 714a may be incidents from an ICM database resulting from the AI Search query executed on the database of ICM incidents. An operation 716 performs reranking of the document chunks to return final top K retrieved document chunks 718. In one implementation, the reranking score $d$ of the document chunks 714, 714a may be computed as follows:

$$ P\,(d) = \alpha \cdot \text{IS} + \beta \cdot \text{TS} + \gamma \cdot \text{SS} $$

Wherein IS represents the information score, which evaluates the quality of the incident summary based on data quality within the incident, measured by token length and pre-computed in the preprocessing engine as disclosed above in FIG. 1-3. TS, the time score, assesses the relevance of incidents by considering their age, where older incidents are presumed less relevant and thus assigned lower values. SS, the source score, checks if the retrieved data matches the current incident, such as matching team or monitor ID in property fields, assigning a value of 1 for matches and 0 otherwise. For example, in one implementation, the values of the coefficients $\alpha$, $\beta$, and $\gamma$ may be 0.5, 0.3 and 0.2, respectively.

The resulting scores of the document chunks 714, 714a may also be normalized and combined to re-rank the retrieved document chunks 718.

The AI based chatbot development system disclosed herein, including various preprocessing engines to preprocess data before deploying the retrieval-based generation using an LM provides a number of technical advantages, including as listed below. Specifically, the AI based chatbot development system disclosed herein provides a versatile, self-hosting framework that seamlessly integrates multiple input sources and scales to meet the demands of large, enterprise-level environments. Its modular nature allows for easy customization and deployment, making it suitable for a variety of use cases. This is also the first work that we observed that leverage cloud AI search for the backend of documentation retrieval.

Unlike many existing advanced retrieval methods, which require extensive preprocessing or fine-tuned embedding models for re-ranking, the AI based chatbot development system's approach is lean and has demonstrated high accuracy in real-world user queries. Furthermore, using the hierarchical skill selection mechanism as disclosed herein intelligently determines which specific functions to invoke based on user queries. This ensures that the most relevant data and tools are applied for each task, reducing latency and improving response accuracy. Unlike conventional chatbots that rely on a generic "planner-agents" framework, which struggles with accuracy as the number of skills increases, the AI based chatbot development system's approach significantly enhances planner performance while maintaining low latency.

Additionally, using the AI based chatbot development system provides users an easy-to-deploy self-hosting model where teams can add and manage plugins/skills specific to their workflows, making it versatile across different engineering teams. Also, by providing a frontend for authentication and security that is separate from the backend and the preprocessing engines, the AI based chatbot development system provides strict access control and authentication processes, allowing secure execution of queries and retrieval of incident telemetry data.

FIG. 8 illustrates an example system 800 that may be useful in implementing the AI based chatbot development system disclosed herein. The example hardware and operating environment of FIG. 8 for implementing the described technology includes a computing device, such as a general-purpose computing device in the form of a computer 20, a mobile telephone, a personal data assistant (PDA), a tablet, smart watch, gaming remote, or other type of computing device. In the implementation of FIG. 8, for example, the computer 20 includes a processing unit 21, a system memory 22, and a system bus 23 that operatively couples various system components, including the system memory 22 to the processing unit 21. There may be only one or there may be more than one processing units 21, such that the processor of a computer 20 comprises a single central-processing unit (CPU), or a plurality of processing units, commonly referred to as a parallel processing environment. The computer 20 may be a conventional computer, a distributed computer, or any other type of computer; the implementations are not so limited.

The system bus 23 may be any of several types of bus structures, including a memory bus or memory controller, a peripheral bus, a switched fabric, point-to-point connections, and a local bus using any of a variety of bus architectures. The system memory 22 may also be referred to as simply the memory and includes read-only memory (ROM) 24 and random-access memory (RAM) 25. A basic input/output system (BIOS) 26, contains the basic routines that help to transfer information between elements within the computer 20, such as during start-up, is stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM, DVD, or other optical media.

The computer 20 may be used to implement the AI based chatbot development system disclosed herein. In one implementation, one or more computer-executable instructions to implement the AI based chatbot development system disclosed herein may be stored in memory of the computer 20, such as the read-only memory (ROM) 24 and random-access memory (RAM) 25.

Furthermore, computer-executable instructions stored on the memory of the computer 20 may be used to Implement the AI based chatbot system disclosed herein. Similarly, instructions stored on the memory of the computer 20 may also be used to implement one or more operations of the AI based chatbot system disclosed herein. The memory of the computer 20 may also one or more instructions to implement the AI based chatbot development system disclosed herein.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated tangible computer-readable media provide non-volatile storage of computer-readable instructions, data structures, program modules and other data for the computer 20. It should be appreciated by those skilled in the art that any type of tangible computer-readable media may be used in the example operating environment.

A number of program modules may be stored on the hard disk, magnetic disk 29, optical disk 31, ROM 24, or RAM 25, including an operating system 35, one or more application programs 36, other program modules 37, and program data 38. A user may generate reminders on the personal computer 20 through input devices such as a keyboard 40 and pointing device 42. Other input devices (not shown) may include a microphone (e.g., for voice input), a camera (e.g., for a natural user interface (NUI)), a joystick, a game pad, a satellite dish, a scanner, or the like. These and other input devices are often connected to the processing unit 21 through a serial port interface 46 that is coupled to the system bus 23, but may be connected by other interfaces, such as a parallel port, game port, or a universal serial bus (USB). A monitor 47 or other type of display device is also connected to the system bus 23 via an interface, such as a video adapter 48. In addition to the monitor, computers typically include other peripheral output devices (not shown), such as speakers and printers.

The computer 20 may operate in a networked environment using logical connections to one or more remote computers, such as remote computer 49. These logical connections are achieved by a communication device coupled to or a part of the computer 20; the implementations are not limited to a particular type of communications device. The remote computer 49 may be another computer, a server, a router, a network PC, a client, a peer device, or other common network node, and typically includes many or all of the elements described above relative to the computer 20. The logical connections depicted in FIG. 8 include a local-area network (LAN) 51 and a wide-area network (WAN) 52. Such networking environments are commonplace in office networks, enterprise-wide computer networks, intranets, and the Internet, which are all types of networks.

When used in a LAN-networking environment, the computer 20 is connected to the local area network 51 through a network interface or adapter 53, which is one type of communications device. When used in a WAN-networking environment, the computer 20 typically includes a modem 54, a network adapter, a type of communications device, or any other type of communications device for establishing communications over the wide area network 52. The modem 54, which may be internal or external, is connected to the system bus 23 via the serial port interface 46. In a networked environment, program engines depicted relative to the personal computer 20, or portions thereof, may be stored in the remote memory storage device. It is appreciated that the network connections shown are example and other means of communications devices for establishing a communications link between the computers may be used.

In an example implementation, software, or firmware instructions for the AI based chatbot development system 810 may be stored in system memory 22 and/or storage devices 29 or 31 and processed by the processing unit 21. The AI based chatbot development operations and data may be stored in system memory 22 and/or storage devices 29 or 31 as persistent datastores.

In contrast to tangible computer-readable storage media, intangible computer-readable communication signals may embody computer readable instructions, data structures, program modules or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include wired media such as a wired network or direct-wired connection, and wireless media such as acoustic, RF, infrared and other wireless media.

Some embodiments of AI based chatbot development system may comprise an article of manufacture. An article of manufacture may comprise a tangible storage medium to store logic. Examples of a storage medium may include one or more types of computer-readable storage media capable of storing electronic data, including volatile memory or non-volatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. In one embodiment, for example, an article of manufacture may store executable computer program instructions that, when executed by a computer, cause the computer to perform methods and/or operations in accordance with the described embodiments. The executable computer program instructions may include any suitable type of code, such as source code, compiled code, interpreted code, executable code, static code, dynamic code, and the like. The executable computer program instructions may be implemented according to a predefined computer language, manner, or syntax, for instructing a computer to perform a certain function. The instructions may be implemented using any suitable high-level, low-level, object-oriented, visual, compiled and/or interpreted programming language.

The AI based chatbot development system disclosed herein may include a variety of tangible computer-readable storage media and intangible computer-readable communication signals. Tangible computer-readable storage can be embodied by any available media that can be accessed by the AI based chatbot development system disclosed herein and includes both volatile and nonvolatile storage media, removable and non-removable storage media. Tangible computer-readable storage media excludes intangible and transitory communications signals and includes volatile and nonvolatile, removable, and non-removable storage media implemented in any method or technology for storage of information such as computer readable instructions, data structures, program modules or other data. Tangible computer-readable storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other tangible medium which can be used to store the desired information, and which can be accessed by the AI based chatbot development system disclosed herein. In contrast to tangible computer-readable storage media, intangible computer-readable communication signals may embody computer readable instructions, data structures, program modules or other data resident in a modulated data signal, such as a carrier wave or other signal transport mechanism. The term "modulated data signal" means a signal that has one or more of its characteristics set or changed in such a manner as to encode information in the signal. By way of example, and not limitation, intangible communication signals include signals moving through wired media such as a wired network or direct- wired connection, and signals moving through wireless media such as acoustic, RF, infrared and other wireless media.

A method disclosed herein includes receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

A system disclosed herein includes one or more processor units; memory; and an AI based chatbot development system stored in the memory and executable by the one or more processor units, the AI based chatbot development system encoding computer-executable instructions on the memory for executing on the one or more processor units a computer process, the computer process including receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

One or more tangible computer-readable storage media encoding instructions for executing a computer process, the computer process including receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

The present disclosure is supplemented by the following examples.

Example 1: A method comprising: receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

Example 2: The method of Example 1, wherein the metadata tags related to the plurality of document chunks comprises at least one of a time related to a document chunk, a location related to the document chunk, a team identification related to the document chunk, and a database identification related to the document chunk.

Example 3: The method of Example 1, further comprising: generating a plurality of hypothetical questions for one or more of the plurality of document chunks, wherein vectorizing the metadata tags to generate metadata embeddings for the plurality of document chunks further comprising generating the embedding of the one or more of the plurality of document chunks including the plurality of hypothetical questions for one or more of the plurality of document chunks.

Example 4: The method of Example 1, further comprising: filtering the plurality of document chunks based on information related to the metadata embeddings related to the document chunks; generating an embedding of the user query; comparing the embedding of the user query with the embeddings of the filtered document chunks; and presenting one or more of the filtered document chunks to the end user based on the comparing of the embedding of the user query with the embeddings of the filtered document chunks.

Example 5: The method of Example 4, further comprising: receiving feedback ranking from the end user related to the one or more of the filtered document chunks presented to the user; and adding the feedback ranking to the metadata tags related to the filtered document chunks.

Example 6: The method of Example 5, further comprising: prioritizing the plurality of document chunks based on the feedback ranking; selecting one or more of the plurality of document chunks based on the prioritizing based on feedback ranking; and presenting the user query with the one or more of the plurality document chunks selected based on the prioritizing based on feedback ranking to an LM.

Example 7: The method of Example 4, further comprising: determining one or more document skills related to the one or more of the document chunks; categorizing the one or more documents skills into a plurality of skill groups; selecting a skill group based on a skill hierarchy, and adding a document skill related to the one or more of the document chunks from the selected skill group to the one or more metadata tags related to the document chunks.

Example 8: The method of Example 7, further comprising: determining an end user question skill based on the question from the end user; selecting one or more of the plurality document chunks based on the end user question skill and the document skill; and presenting the user query with the one or more of the plurality document chunks selected based on the end user question skill and the document skill to an LM.

Example 9: The method of Example 4, further comprising: analyzing the one or more of the filtered document chunks to the end user based on a comparison of the embedding of the user query with the embeddings of the filtered document chunks to generate one or more subsequent questions for the end user; and presenting the one or more subsequent questions for the end user.

Example 10: A system comprising: one or more processor units; memory; and an AI based chatbot development system stored in the memory and executable by the one or more processor units, the AI based chatbot development system encoding computer-executable instructions on the memory for executing on the one or more processor units a computer process, the computer process comprising: receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

Example 11: The system of Example 10, wherein the wherein the computer process further comprising: generating a plurality of hypothetical questions for one or more of the plurality of document chunks, wherein vectorizing the metadata tags to generate metadata embeddings for the plurality of document chunks further comprising generating the embedding of the one or more of the plurality of document chunks including the plurality of hypothetical questions for one or more of the plurality of document chunks.

Example 12: The system of Example 11, wherein the computer process further comprising: filtering the plurality of document chunks based on information related to the metadata embeddings related to the document chunks; generating an embedding of the user query; comparing the embedding of the user query with the embeddings of the filtered document chunks; and presenting one or more of the filtered document chunks to the end user based on the comparing of the embedding of the user query with the embeddings of the filtered document chunks.

Example 13: The system of Example 12, wherein the computer process further comprising: receiving feedback ranking from the end user related to the one or more of the filtered document chunks presented to the user; and adding the feedback ranking to the metadata tags related to the filtered document chunks.

Example 14: The system of Example 13, wherein the computer process further comprising: prioritizing the plurality of document chunks based on the feedback ranking; selecting one or more of the plurality of document chunks based on the prioritizing based on feedback ranking; and presenting the user query with the one or more of the plurality document chunks selected based on the prioritizing based on feedback ranking to an LM.

Example 15: The system of Example 12, wherein the computer process further comprising: determining a document skill related to related to the one or more of the document chunks; and adding the document skill related to the one or more of the document chunks to the one or more metadata tags related to the document chunks.

Example 16: The system of Example 15, wherein the computer process further comprising: determining an end user question skill based on the question from the end user; selecting one or more of the plurality document chunks based on the end user question skill and the document skill; and presenting the user query with the one or more of the plurality document chunks selected based on the end user question skill and the document skill to an LM.

Example 17: The system of Example 12, wherein the computer process further comprising: analyzing the one or more of the filtered document chunks to the end user based on a comparison of the embedding of the user query with the embeddings of the filtered document chunks to generate one or more subsequent questions for the end user; and presenting the one or more subsequent questions for the end user.

Example 18: One or more tangible computer-readable storage media encoding instructions for executing a computer process, the computer process comprising: receiving from a user a user configuration file including chatbot framework information for configuring a framework for a chatbot for a team of end users, the user configuration file including at least one of a name of a team, one or more document sites related to the team, one or more incident identifications searched by the team; determining a plurality of data sources relevant to the team based on the chatbot framework information; downloading a plurality of document chunks from the data sources relevant to the team; processing the plurality of document chunks to generate metadata tags related to the plurality of document chunks; vectorizing the metadata tags to generate metadata embeddings for the plurality of document chunks; and in response to receiving a user query from an end user, using the metadata embeddings to select a collection of the plurality of document chunks that are passed to a language model (LM) with the user query.

Example 19: The one or more tangible computer-readable storage media of Example 18, wherein the computer process further comprising: filtering the plurality of document chunks based on information related to the metadata embeddings related to the document chunks; generating an embedding of the user query; comparing the embedding of the user query with the embeddings of the filtered document chunks; and presenting one or more of the filtered document chunks to the end user based on the comparing of the embedding of the user query with the embeddings of the filtered document chunks.

Example 20: The one or more tangible computer-readable storage media of Example 19, wherein the computer process further comprising: receiving feedback ranking from the end user related to the one or more of the filtered document chunks presented to the user; and adding the feedback ranking to the metadata tags related to the filtered document chunks.

A system receives a user a configuration file including chatbot framework information for configuring a framework for a chatbot for a team of end users, uses the configuration file to determining a plurality of data sources relevant to the team; downloads document chunks from the data sources, processes the document chunks to generate metadata tags, and vectorizes the metadata tags to generate metadata embeddings for the plurality of document chunks. In response to receiving a user query, the system uses the metadata embeddings to select a collection of the document chunks and passes the collection of document chunks to a language model (LM) with the user query.

The implementations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language.

**Claims**

1. A method comprising:

   receiving from a user a user configuration file (502) including chatbot (156) framework information for configuring a framework for a chatbot (156) for a team of end users, the user configuration file (502) including at least one of a name of a team, one or more document sites related to the team, one or more incident identifications searched by the team;
   determining a plurality of data sources (102) relevant to the team based on the chatbot (156) framework information;
   downloading a plurality of document chunks (714a, 714, 310) from the data sources (102) relevant to the team;
   processing the plurality of document chunks (714a, 714, 310) to generate metadata tags related to the plurality of document chunks (714a, 714, 310);
   vectorizing the metadata tags to generate metadata embeddings for the plurality of document chunks (714a, 714, 310); and
   in response to receiving a user query from an end user (180), using the metadata embeddings to select a collection of the plurality of document chunks (714a, 714, 310) that are passed to a language model, LM, (206, 114) with the user query.

2. The method of claim 1, wherein the metadata tags related to the plurality of document chunks comprises at least one of a time related to a document chunk, a location related to the document chunk, a team identification related to the document chunk, and a database identification related to the document chunk.

3. The method of claim 1 or claim 2, further comprising:

   generating a plurality of hypothetical questions for one or more of the plurality of document chunks,
   wherein vectorizing the metadata tags to generate metadata embeddings for the plurality of document chunks further comprising generating the embedding of the one or more of the plurality of document chunks including the plurality of hypothetical questions for one or more of the plurality of document chunks.

4. The method of any preceding claim, further comprising:

   filtering the plurality of document chunks based on information related to the metadata embeddings related to the document chunks;
   generating an embedding of the user query;
   comparing the embedding of the user query with the embeddings of the filtered document chunks; and
   presenting one or more of the filtered document chunks to the end user based on the comparing of the embedding of the user query with the embeddings of the filtered document chunks.

5. The method of claim 4, further comprising:

   receiving feedback ranking from the end user related to the one or more of the filtered document chunks presented to the user; and
   adding the feedback ranking to the metadata tags related to the filtered document chunks.

6. The method of claim 5, further comprising:

   prioritizing the plurality of document chunks based on the feedback ranking;
   selecting one or more of the plurality of document chunks based on the prioritizing based on feedback ranking; and
   presenting the user query with the one or more of the plurality document chunks selected based on the prioritizing based on feedback ranking to an LM.

7. The method of any claim 4 to 6, further comprising:

   determining one or more document skills related to the one or more of the document chunks;
   categorizing the one or more documents skills into a plurality of skill groups;
   selecting a skill group based on a skill hierarchy, and
   adding a document skill related to the one or more of the document chunks from the selected skill group to the one or more metadata tags related to the document chunks.

8. The method of claim 7, further comprising:

   determining an end user question skill based on the question from the end user;
   selecting one or more of the plurality document chunks based on the end user question skill and the document skill; and
   presenting the user query with the one or more of the plurality document chunks selected based on the end user question skill and the document skill to an LM.

9. The method of any claim 4 to 8, further comprising:

   analyzing the one or more of the filtered document chunks to the end user based on a comparison of the embedding of the user query with the embeddings of the filtered document chunks to generate one or more subsequent questions for the end user; and
   presenting the one or more subsequent questions for the end user.

10. A system (800) comprising:

   one or more processor units;
   memory; and
   an AI based chatbot (156) development system (800, 810, 100) stored in the memory and executable by the one or more processor units, the AI based chatbot (156) development system (800, 810, 100) encoding computer-executable instructions on the memory for executing on the one or more processor units a computer process, the computer process comprising:

   receiving from a user a user configuration file (502) including chatbot (156) framework information for configuring a framework for a chatbot (156) for a team of end users, the user configuration file (502) including at least one of a name of a team, one or more document sites related to the team, one or more incident identifications searched by the team;
   determining a plurality of data sources (102) relevant to the team based on the chatbot (156) framework information;
   downloading a plurality of document chunks (714a, 714, 310) from the data sources (102) relevant to the team;
   processing the plurality of document chunks (714a, 714, 310) to generate metadata tags related to the plurality of document chunks (714a, 714, 310);
   vectorizing the metadata tags to generate metadata embeddings for the plurality of document chunks (714a, 714, 310); and
   in response to receiving a user query from an end user (180), using the metadata embeddings to select a collection of the plurality of document chunks (714a, 714, 310) that are passed to a language model, LM, (206, 114) with the user query.

11. The system of claim 10, wherein the computer process further comprising:

   generating a plurality of hypothetical questions for one or more of the plurality of document chunks,
   wherein vectorizing the metadata tags to generate metadata embeddings for the plurality of document chunks further comprising generating the embedding of the one or more of the plurality of document chunks including the plurality of hypothetical questions for one or more of the plurality of document chunks.

12. The system of claim 11, wherein the computer process further comprising:

   filtering the plurality of document chunks based on information related to the metadata embeddings related to the document chunks;
   generating an embedding of the user query;
   comparing the embedding of the user query with the embeddings of the filtered document chunks; and

presenting one or more of the filtered document chunks to the end user based on the comparing of the embedding of the user query with the embeddings of the filtered document chunks.

13. The system of claim 12, wherein the computer process further comprising:

receiving feedback ranking from the end user related to the one or more of the filtered document chunks presented to the user; and adding the feedback ranking to the metadata tags related to the filtered document chunks.

14. The system of claim 12 or claim 13, wherein the computer process further comprising:

determining a document skill related to the one or more of the document chunks; and adding the document skill related to the one or more of the document chunks to the one or more metadata tags related to the document chunks.

15. One or more tangible computer-readable storage media encoding instructions for executing a computer process, the computer process comprising:

receiving from a user a user configuration file (502) including chatbot (156) framework information for configuring a framework for a chatbot (156) for a team of end users, the user configuration file (502) including at least one of a name of a team, one or more document sites related to the team, one or more incident identifications searched by the team; determining a plurality of data sources (102) relevant to the team based on the chatbot (156) framework information; downloading a plurality of document chunks (714a, 714, 310) from the data sources (102) relevant to the team; processing the plurality of document chunks (714a, 714, 310) to generate metadata tags related to the plurality of document chunks (714a, 714, 310); vectorizing the metadata tags to generate metadata embeddings for the plurality of document chunks (714a, 714, 310); and in response to receiving a user query from an end user (180), using the metadata embeddings to select a collection of the plurality of document chunks (714a, 714, 310) that are passed to a language model, LM, (206, 114) with the user query.

FIG. 1

### Incident Tables

| Incident ID | OwningTeam | Title |
|---|---|---|
| 12345678 | Team X | [Storage... |
| 23456789 | Team Y | Server lo... |

| Incident ID | ChangedBy | Text |
|---|---|---|
| 12345678 | br... | Incident... |
| 12345678 | gaut... | Geneva... |

| RootCauseID | Title | Category |
|---|---|---|
| 23145561 | TiP... | Test -... |
| 12351324 | Test... | Other -... |

FIG. 2

300

① 302 → 308

308 → 310

310 → ③ 320 → ④ 322

302 → ② 316

312 → 316 → 318 → 320

318 → 320

322 ⇄ 324

Chunk files 626

"title": "https://eng...

"filepath": "sterlin...

"content": "···\n <...

**FIG. 3**

406a

402a    404a

408a

Question

410a

400a

+ Positive Question-Doc Signal
x Negative Question-Doc Signal

400b

406b

402b    404b

408b

Question

410b

FIG. 4

FIG. 5

600

602

Question

604

Contains IcM ID?

Yes → Extract Current_ICM (606)

No

608

General Question?

No → Special Skills (612)

Yes

610

Context Needed?

Yes → Get_*Skills (614)

No

616

LM

618

Additional Skills?

No → End

Yes

620

Post-LM Skills

End

FIG. 6

FIG. 7

800

20

SYSTEM MEMORY

(ROM)   24   26   22

BIOS

OPERATING SYSTEM   35

APPLICATION PROGRAMS   36

OTHER PROGRAM MODULES   37

PROGRAM DATA   38

25

PROCESSING UNIT   21

VIDEO ADAPTER   48

810

SYSTEM BUS   23

32   33   34   46   53

HARD DISK DRIVE INTERFACE

MAGNETIC DISK DRIVE INTERFACE

OPTICAL DRIVE INTERFACE

SERIAL PORT INTERFACE

NETWORK INTERFACE

27   28   30

47

MONITOR

800

LOCAL AREA NETWORK

51

29   31

54   WIDE AREA NETWORK

MODEM

52

42   40

49

REMOTE COMPUTER

35   36   37   38

OPERATING SYSTEM | APPLICATION PROGRAMS | OTHER PROGRAM MODULES | PROGRAM DATA

36

APPLICATION PROGRAMS

FIG. 8

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/289863 A1 (SMITH LEWIS ANDREW [US] ET AL) 29 August 2024 (2024-08-29) * the whole document * ----- | 1-15 | INV. G06F16/3329 H04L51/02 |

**TECHNICAL FIELDS SEARCHED (IPC)**

G06F
H04L
G06N

The present search report has been drawn up for all claims

| Place of search | Date of completion of the search | Examiner |
|---|---|---|
| The Hague | 27 February 2026 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7388

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2026

| Patent document cited in search report | Publication date | Patent family member(s) | | Publication date |
|---|---|---|---|---|
| US 2024289863 A1 | 29-08-2024 | EP | 4670083 A1 | 31-12-2025 |
| | | KR | 20260015780 A | 03-02-2026 |
| | | US | 2024289863 A1 | 29-08-2024 |
| | | WO | 2024178435 A1 | 29-08-2024 |

EPO FORM P0459

For more details about this annex : see Official Journal of the European Patent Office, No. 12/82